# EUROPEAN PATENT SPECIFICATION

(11) **EP 0 873 634 B1**
(45) Date of publication and mention of the grant of the patent: **06.09.2006**
(21) Application number: 96940229.6
(22) Date of filing: 29.11.1996
(51) Int. Cl.: H04M 3/42

(54) **PROGRAMMING OF TELECOMMUNICATION SERVICES BY CUSTOMERS**
PROGRAMMIERUNG VON FERNMELDEDIENSTEN DURCH TEILNEHMER
PROGRAMMATION DE SERVICES DE TELECOMMUNICATION PAR LES USAGERS

(30) Priority: 12.01.1996 SE 9600138
(43) Date of publication of application: 28.10.1998
(73) Proprietor: TELIA AB, 123 86 Farsta (SE)
(72) Inventor: NYCKELG RD, Sören, S-445 34 Floda (SE)
(74) Representative: Akerman, Marten Lennart
(86) International application number: PCT/SE1996/001571
(87) International publication number: WO 1997/025807

(56) References cited:
- US-A- 5 436 957

## Description

### TECHNICAL FIELD

The present invention relates to a method and a device at a telecommunication system which combines just any number of in the system included function modules which make possible customer specific services.

### PRIOR ART

It is supposed to be in the interest of all telecommunication operators to with short lead times offer their customers special and customer adapted services. In a future there may also be a desire to offer the customers the possibility to perform necessary programming themselves, and at that be given possibility to introduce their own services themselves directly into the telecommunication network. As a base for such a development can for instance intelligent network technology be utilized.

The problem is to combine one for the customer understandable development environment with flexible and efficient traffic controlling functions and at the same time ensure that the created service complies with necessary operator demands concerning for instance debiting, traffic parameters, network signalling etc. Development times and costs for a customer programmed service in addition must be competitive.

The technical problems the invention intends to solve therefore is to effect a way which makes possible that above mentioned services respective demands can be fulfilled in one for all concerned parties satisfying way.

At a novelty investigation in order to find out whether the previous technology solves above mentioned problems was found that the only possibility today to make it possible to offer programming of services by customers is to give the customers access to the development environment of the operator in question. This environment, however, is not accessible by outsiders owing to authorization reasons, complexity of use etc.

One example of such a previous technology is described in US-A-5,436,957. US-A-5,436,957 describes a method and a system structure which will permit a commercial telephone subscriber to offer its customers access to telephone services over a group of the subscriber's lines on a basis controlled by the subscriber. However, it is not possible for the customers in the system of US-A-5,436,957 to perform necessary programming themselves, and to introduce their own services themselves directly into the telecommunication network.

The above described problem consequently does not seem to have been discussed, let alone solved.

### SUMMARY OF THE INVENTION

The aim with the present invention consequently is to solve the above described problem.

This aim is reached with a method and a device at a telecommunication system which gives the customer a possibility himself/herself to create his/her own telecommunication services by combining different function modules included in the system via a customer adapted support system installed at the customer's in question.

Further characteristics of the invention are given in the subclaims.

The invention now will be described in more details.

### DETAILED DESCRIPTION OF AN EMBODIMENT OF THE INVENTION

The idea of the invention is to make possible programming of telecommunication services by customer by combining function modules with a new customer adapted support system for handling of the modules. The support system which is installed at the customer's is suitably developed for a generally accessible computer environment, for instance Macintosh or Windows for PC.

As a base for the present invention there is a previously presented invention which describes how telecommunication services can be built up with separate function modules which can be executed in an SCP (Service Control Point) based on Ericsson's IN-platform.

These function modules are created with one by Ericsson developed support system (SMAS), where so called SIBs (Service Independent Building blocks) are linked together.

The above mentioned is described in detail in the by Telia filed patent applications 9500033-7 and 9500034-5 in which final official actions have already been executed.

It is accordingly previously known by said patent applications to create telecommunication services in a telecommunication network with AXE technology by linking up subfunction blocks (so called SIBs) to a constellation of blocks, which constellation constitutes a complete service. Respective service is administratively tied to a subscription, and consequently customer unique computer information is arranged for respective subscriber or customer.

The block constellation consequently is a modular construction where respective function module with its belonging subfunction constitutes one in the system by the subscriber in question subscribable unit, which in addition constitutes a validable multi-usable unit.

Consequently one and the same unit can be utilized for construction/linking together of two, three or more services to one and the same or different customers/subscribers.

In one embodiment the service can create or consist of voice answer back, pay call, virtual private network, account call, or other conventional service in the system. As example at this can be mentioned that respective module can execute a subfunction consisting of geographical control function, time control function, connection function, authorization function etc. Respective subfunction executing module can administratively be allotted respective subscriber or customer which at that subscribes to two or more modules which in linked up state executes the by the customer wanted service in question.

The subfunctions executing modules can communicate with each other via connections in an itself known way which is used in said system of type AXE. Consequently a subfunction executing first unit can consist of an authorization module which can be linked up with other modules for instance for speech control, number information, call connection function and/or other concerned functions in the system.

In another embodiment a module executing its subfunction stores customer or group unique data, which by previously mentioned linking procedure can be made accessible for a number of each other in other respects independent services. Examples of said application then are when services of type account call and "VPN Remote Access" use the same authorization card with belonging PIN-code for indentity control.

In a similar way, group commmon data can be made accessible for individually related services.

The with the modules constructed services also make it possible to execute time functions, functions for geographical classification, sequential control, collection of statistics etc.

The services are constructed modularly to a greater extent than what has previously been possible. The modules are validated each individually, which implies that no renewed validations need to be performed when the modules are multi- or reused in a renewed service construction. The modules consequently represent logical functions and are based on the by the system according to AXE established platform. Said platforms also can be regarded as nodes. By double or multi use according to the now suggested principle, it will be possible to save very large amounts of data capacity in the data storages. Different data levels, for instance for the individual and company use will be possible. An individual service can be changed to a company aimed use or vice versa.

The present invention consequently utilizes a number of very suitable qualities of the above described function modules. These qualities consist in that:
a) The modules can execute different traffic control functions, the qualities of which are influenced by customer unique data. Example of this is the time control module, where a customer unique time schedule controls how the calls shall be controlled at different points of time different days of the week.
b) When a customer wants a more complex traffic control, a multiple of function modules can be linked together.
c) Setup of the call to the answering place is made by a special function module which ensures that the setup of speech routes, loading of debiting data, monitoring and managing of network occurrences, and disconnection of speech routes are made according to the network demands which are made upon the service. This function module can be preceded by a verification module, the task of which is to control that customer defined data for call connection is acceptable from a network point of view.
d) The modules are validated and approved of for network introduction with the condition that they shall be possible to link together in just any way and that the setup then is made with the special connection module. The essential demands on debiting, traffic parameters, network signalling, etc are by that fulfilled.

The new support system executes an easily understood development environment by means of which the customer himself/herself can link together function modules to customer unique services, compared with how SMAS links together SIBs to a function module.

The support system has knowledge of existing function modules and of their possibilities and limitations. The system can be completed with new function modules by and by as such become accessible in the network. This can for instance be made by that the customer allows the support system to read one by the operator produced updating file.

When customer developed services shall be installed, modified or deleted, the system communicates via networks or modems with GSA (Generic Service Adapter), which is the existing application in SMAS which handles configuration, installation, etc of customer data for function modules. The customer consequently can manage his/her service without intervention from the network operator.

If SMAS is completed with one by the operator himself/herself developed application for feeding out files of statistical data, also basic data for the statistics can be transmitted to the customer's support system without interference from the operator.

After-treatment of the statistics is after that made by the customer himself/herself, for instance with the generally available program Excel. As a parenthesis can be mentioned that a lot of customers in the USA explicitly demands that the operator should not acquaint himself/herself with statistical data, which this concept would satisfy.

The above described is only to be regarded as an embodiment of the present invention and the extent of protection of the invention is only restricted by what is indicated in the following patent claims.

## Claims

1. Method for providing telecommunications services by combining function modules of a telecommunications system, **characterized in that** said function modules with their belonging subfunctions constitute in the system by the customer in question subscribable units, at which said customer himself/herself creates his/her own telecommunication services by combining different function modules via a customer adapted support system.

2. Method according to patent claim 1,
**characterized in that** said support system is installed at said customer's.

3. Method according to patent claim 2,
**characterized in that** said support system is developed for a generally accessible computer environment, preferably Macintosh or Windows for PC, at which said customer can program his/her own said telecommunication services by combining different said function modules.

4. Method according to any of the previous patent claims, **characterized in that** said support system has knowledge of existing function modules and their possibilities and limitations.

5. Method according to any of the previous patent claims, **characterized in that** said support system is completed with new function modules by and by as such become accessible on the telecommunication network, which is arranged by that said customer makes said support system read one by the network operator produced updating file.

6. Method according to any of the previous patent claims, **characterized in that** customer developed services are installed, modified, controlled or deleted by that said support system commmunicates via a network or a modem with GSA, at which said customer can handle said services without intervention by said network operator.

7. A telecommunication system comprising function modules, said telecommunication system furthermore comprising a device for combining a plurality of said modules,
**characterized in that** said device is adapted for combining a plurality of said modules in order to create a desired customer specific telecommunication service in response to a customer adapted support system.

8. Telecommunication system according to patent claim 7,
**characterized in that** said support system is installed at said customer's, at which said support system is developed for a generally accessible computer environment, preferably Macintosh or PC.

9. Telecommunication system according to any of the patent claims 7 or 8, **characterized in that** said customer specific telecommunication services are built up with said separate function modules with their specific subfunctions, which function modules are tied to said customer via subscription.

10. Telecommunication system according to patent claim 9,
**characterized in that** said function modules are created by means of an Ericsson-developed support system (SMAS) where subfunction blocks (SIBs) are linked together.

11. Telecommunication system according to any of the patent claims 7-10, **characterized in that** said support system communicates via a network or a modem with GSA (Generic Service Adapter) when said customer via the support system installs, modifies, controls or deletes a specific telecommunication service.

## Patentansprüche

1. Verfahren zum Bereitstellen von Telekommunikationsdienstleistungen durch Kombinieren von Funktionsmodulen eines Telekommunikationssystems, **dadurch gekennzeichnet, dass** die Funktionsmodule mit ihren zugehörigen Subfunktionen in dem System vom jeweiligen Kunden abonnierbare Einheiten darstellen, an denen der Kunde selbst seine eigenen Telekommunikationsdienstleistungen schafft durch Kombinieren von unterschiedlichen Funktionsmodulen über ein kundenadaptiertes Unterstützungssystem.

2. Verfahren nach Patentanspruch 1, **dadurch gekennzeichnet, dass** das Unterstützungssystem am Ort des Kunden installiert ist.

3. Verfahren nach Patentanspruch 2, **dadurch gekennzeichnet, dass** das Unterstützungssystem für eine allgemein zugängliche Computerumgebung, vorzugsweise Macintosh oder Windows für PC, entwickelt ist, an der der Kunde seine eigenen Telekommunikationsdienstleistungen programmieren kann durch Kombinieren unterschiedlicher Funktionsmodule.

4. Verfahren nach einem der vorangehenden Patentansprüche, **dadurch gekennzeichnet, dass** das Unterstützungssystem Kenntnis von den existierenden Funktionsmodulen und ihren Möglichkeiten und Begrenzungen hat.

5. Verfahren nach einem der vorangehenden Patentansprüche, **dadurch gekennzeichnet, dass** das Unterstützungssystem nach und nach mit neuen Funktionsmodulen vervollständigt wird, so wie diese auf dem Telekommunikationsnetzwerk zugänglich werden, welches **dadurch** eingerichtet wird, dass der Kunde eine von dem Netzwerkbetreiber erzeugte Aktualisierungsdatei durch das Unterstützungssystem lesen lässt.

6. Verfahren nach einem der vorangehenden Patentansprüche, **dadurch gekennzeichnet, dass** kundenentwickelte Dienstleistungen **dadurch** installiert, modifiziert, gesteuert oder gelöscht werden, dass das Unterstützungssystem über ein Netzwerk oder ein Modem mit GSA kommuniziert, bei welchem der Kunde die Dienstleistungen ohne Einwirkung durch die Netzwerkbetreiber handhaben kann.

7. Telekommunikationssystem mit Funktionsmodulen, wobei das Telekommunikationssystem ferner eine Einrichtung zum Kombinieren einer Mehrzahl der Module aufweist, **dadurch gekennzeichnet, dass** die Einrichtung dafür angepasst ist, eine Mehrzahl der Module zu kombinieren, um eine gewünschte kundenspezifische Telekommunikationsdienstleistung zur Reaktion auf ein kundenangepasstes Unterstützungssystem zu schaffen.

8. Telekommunikationssystem nach Patentanspruch 7, **dadurch gekennzeichnet, dass** das Unterstützungssystem am Ort des Kunden installiert ist, bei dem das Unterstützungssystem entwickelt ist für eine allgemein zugängliche Computerumgebung, vorzugsweise Macintosh oder PC.

9. Telekommunikationssystem nach einem der Patentansprüche 7 oder 8, **dadurch gekennzeichnet, dass** die kundenspezifischen Telekommunikationsdienstleistungen mit den getrennten Funktionsmodulen mit ihren spezifischen Subfunktionen aufgebaut sind, wobei die Funktionsmodule mit dem Kunden über Abonnement verknüpft sind.

10. Telekommunikationssystem nach Patentanspruch 9, **dadurch gekennzeichnet, dass** die Funktionsmodule geschaffen sind mittels eines von Ericsson entwickelten Unterstützungssystems (SMAS), in welchem Subfunktionsblöcke (SIBs) miteinander verknüpft sind.

11. Telekommunikationssystem gemäß einem der Patentansprüche 7 bis 10, **dadurch gekennzeichnet, dass** das Unterstützungssystem über ein Netzwerk oder ein Modem mit GSA (Generic Service Adapter) kommuniziert, wenn der Kunde über das Unterstützungssystem eine spezifische Telekommunikationsdienstleistung installiert, modifiziert, steuert oder löscht.

## Revendications

1. Procédé pour fournir des services de télécommunications en combinant des modules de fonction d'un système de télécommunications, **caractérisé en ce que** lesdits modules de fonction et leurs sous-fonctions constituent dans le système établi par le client en question des unités auxquelles il est possible de s'abonner, au niveau desquelles ledit client crée lui-même ses propres services de télécommunications en combinant différents modules de fonction via un système de support adapté au client.

2. Procédé selon la revendication 1, **caractérisé en ce que** ledit système de support est installé chez ledit client.

3. Procédé selon la revendication 2, **caractérisé en ce que** ledit système de support est développé pour un environnement informatique généralement accessible, de préférence Macintosh ou Windows pour PC, au niveau duquel ledit client peut programmer ses propres dits services de télécommunication en combinant lesdits différents modules de fonction.

4. Procédé selon l'une quelconque des revendications précédentes, **caractérisé en ce que** ledit système de support a connaissance de modules de fonction existants et de leurs possibilités et limitations.

5. Procédé selon l'une quelconque des revendications précédentes, **caractérisé en ce que** ledit système de support est complété avec de nouveaux modules de fonction et à ce titre deviennent accessibles sur le réseau de télécommunication, qui est agencé par ledit client entraînant la lecture de l'un deux par ledit système de support au moyen du fichier de mise à jour produit par l'opérateur de réseau.

6. Procédé selon l'une quelconque des revendications précédentes, **caractérisé en ce que** les services développés par le client sont installés, modifiés, contrôlés ou supprimés par ledit système de support qui communique via un réseau ou un modem avec GSA, au niveau duquel ledit client peut traiter lesdits services sans l'intervention dudit opérateur de réseau.

7. Système de télécommunication comprenant des modules de fonction, ledit système de télécommunication comprenant en outre un dispositif pour combiner une pluralité desdits modules,
**caractérisé en ce que** ledit dispositif est adapté pour combiner une pluralité desdits modules afin de créer un service de télécommunication spécifique au client souhaité en réponse à un système de support adapté au client.

8. Système de télécommunication selon la revendication 7,
**caractérisé en ce que** ledit système de support est installé chez le client, chez lequel ledit système de support est développé pour un environnement informatique généralement accessible, de préférence Macintosh ou PC.

9. Système de télécommunication selon l'une quelconque des revendications 7 ou 8,
**caractérisé en ce que** lesdits services de télécommunication spécifiques au client sont constitués desdits modules de fonction séparés avec leurs sous-fonctions spécifiques, lesquels modules de fonction sont connectés audit client via abonnement.

10. Système de télécommunication selon la revendication 9,
**caractérisé en ce que** lesdits modules de fonction sont créés au moyen d'un système de support développé par Ericsson (SMAS) où des blocs de sous-fonction (SIBs) sont reliés ensemble.

11. Système de télécommunication selon l'une quelconque des revendications 7 à 10,
**caractérisé en ce que** ledit système de support communique via un réseau ou un modem avec GSA (adaptateur de service générique) lorsque ledit client via le système de support installe, modifie, contrôle ou supprime un service de télécommunication spécifique.
